# DEMANDE DE BREVET EUROPEEN

(11) **EP 0 921 100 A1**
(43) Date de publication de la demande: **09.06.1999**
(21) Numéro de dépôt: 98402618.7
(22) Date de dépôt: 21.10.1998
(51) Int. Cl.: C02F 1/04, B01D 5/00

(54) **Procédé et installation pour le traitement d'effluents liquides**

(30) Priorité: 24.10.1997 FR 9713335
(71) Demandeur: Agence Commerciale de Représentation Ile de France, 78100 Saint Germain en Laye (FR)
(72) Inventeur: Hustache, François, 78100 Saint Germain en Laye (FR)
(74) Mandataire: Leboyer, Jean-Jacques

(57) **Abrégé**

L'invention concerne un procédé pour le traitement et l'élimination des effluents liquides, dans lequel:
a) on vaporise, avantageusement au moyen d'un brûleur (11) dans une chaudière (10), les effluents liquides réunis;
b) on collecte les vapeurs (17) émises dans l'étape a) et on les condense (7);
c) on sépare les boues subsistant dans la chaudière et on déconcentre ainsi l'effluent liquide traité dans l'étape a); et
d) on évapore dans l'évaporateur A les vapeurs condensées de l'étape b) et les fractions incondensables à l'étape a) ci-dessus sont pulsées par la conduite (20) vers le brûleur (11) pour être incinérées.
tandis que pour amorcer le cycle d'étapes susdites on remplit au préalable le récipient de récupération des condensats, avantageusement par de l'eau de ville.

Utilisation notamment pour le traitement et l'élimination des effluents liquides de toutes natures, par exemple des lixiviats des décharges d'ordures ménagères et des lisiers.

## Description

La présente invention concerne le traitement des effluents liquides, en particulier des produits de lixiviation ou lixiviats, tels que ceux provenant des décharges d'ordures ménagères, ainsi que des lisiers, entre autres. Elle concerne plus particulièrement un procédé et une installation pour le traitement des effluents liquides en vue de faciliter leur élimination et de réduire le coût dudit traitement.

On entend ici par effluents liquides l'ensemble des rejets liquides émanant par exemple d'un traitement industriel, d'un ruissellement ou encore d'une collecte par un réseau d'égouts. Parmi eux, les lixiviats sont les produits résultant de la lixiviation appliquée sur toutes matières, tels que les lixiviats de décharges d'ordures ménagères, tandis que les lisiers sont les mélanges liquides provenant des élevages d'animaux.

Le traitement selon l'invention met en oeuvre une combinaison d'étapes d'évaporation-condensation et peut être réalisé selon un fonctionnement autonome.

Les techniques actuellement utilisées pour traiter les effluents liquides tels que les lixiviats sont:
- soit un traitement par osmose inverse et ultrafiltration, qui donne certes d'excellents résultats, mais est coûteux et n'est donc utilisé que pour de grandes quantités de lixiviats et génère des saumures que le procédé selon la présente invention est au contraire à même de traiter;
- soit un envoi en station d'épuration, mais pour un coût de traitement par unité de volume très élevé et avec de plus en plus un refus des responsables des stations d'épuration de se charger de ce traitement;
- soit même aucun traitement ou alors un simple lagunage avant le rejet en milieu naturel.

Ces procédés de la technique antérieure ne sont pas conformes aux normes actuelles et les exploitants concernés doivent donc se mettre en conformité.

Il y a par conséquent un besoin réel pour une technique de traitement des effluents liquides de tous types, qui soit à la fois moins onéreuse, plus aisée à mettre en oeuvre sur site et plus respectueuse de l'environnement.

On a maintenant trouvé non seulement que l'on peut traiter et éliminer pratiquement totalement les effluents liquides sans rejets nocifs pour l'homme et/ou l'environnement, mais également que le traitement peut s'opérer sans apport substantiel d'énergie autre que celui que peuvent générer les effluents liquides dans les conditions du traitement.

L'invention a ainsi pour premier objet un procédé pour le traitement et l'élimination des effluents liquides, dans lequel:
a) on vaporise, avantageusement au moyen d'un brûleur dans une chaudière, les effluents liquides réunis;
b) on collecte les vapeurs émises dans l'étape a) et on les condense;
c) on sépare les boues subsistant dans la chaudière et on déconcentre ainsi l'effluent liquide traité dans l'étape a); et
d) on évapore les vapeurs condensées de l'étape b) et on soumet les fractions incondensables à l'étape a) ci-dessus pour les incinérer;
tandis que pour amorcer le cycle d'étapes susdites on remplit au préalable le récipient de récupération des condensats, avantageusement par de l'eau de ville.

La présente invention a également pour objet une installation pour le traitement et l'élimination des effluents liquides comprenant, convenablement alimentés et reliés entre eux, respectivement:
a) des moyens d'introduction des effluents liquides et des moyens de vaporisation de ceux-ci, tels que par exemple au moins un brûleur situé dans une chaudière;
b) des moyens pour la collecte des vapeurs émises par la mise en oeuvre des moyens de l'étape a) et des moyens pour la condensation des dites vapeurs;
c) des moyens pour la séparation et l'évacuation des boues subsistant dans la chaudière, lesdits moyens effectuant également la déconcentration de l'effluent liquide; et
d) des moyens pour l'évaporation des vapeurs condensées de l'étape b), et des moyens pour soumettre les fractions incondensables à l'étape a) ci-dessus en vue de leur incinération.

Le procédé et l'installation selon l'invention seront décrits plus en détail ci-après en référence aux planches de dessins annexées, dans lesquelles:
- Fig. 1 représente un schéma de principe de mise en oeuvre du procédé selon l'invention;
- Fig. 2 représente une vue schématique de dessus d'une forme de réalisation d'une installation selon l'invention.

Dans une installation conforme à l'invention selon la forme de réalisation ainsi illustrée et en conformité avec le schéma de principe qui s'y rapporte, les effluents liquides sont amenés dans la cuve de la chaudière 10, de préférence par un système de remplissage automatique 15 utilisant si nécessaire une pompe appropriée. Ces effluents liquides sont vaporisés dans la chaudière 10 par l'action d'un ou plusieurs brûleurs 11.

Dans la chaudière 10 le niveau d'effluent liquide peut être maintenu sensiblement constant par l'alimentation automatique susdite.

Les vapeurs alors émises sont collectées par la hotte 9 et sont pulsées vers un condenseur 7 sous l'action d'un moto-ventilateur 8.

Les effluents liquides ainsi traités dans la chaudière peuvent avantageusement être mis en circulation, sous l'impulsion d'une pompe 13, entre la chaudière et le réservoir étanche 14, afin de séparer les boues et de déconcentrer l'effluent liquide au fur et à mesure de l'évaporation.

Selon une forme de mise en oeuvre particulièrement préférée, la chaudière présente un volume d'environ 4 m de longueur x 2 m de largeur x 1,6 m de hauteur et a une capacité d'évaporation de 625 1/h. Le volume d'effluent liquide et la surface d'échange sont avantageusement très largement dimensionnés, afin d'éviter les échanges trop importants qui provoqueraient des incrustations de parties solides sur les points chauds du foyer de la chaudière. Le niveau d'effluent liquide est de préférence maintenu pratiquement constant, afin que le corps de chauffe soit toujours immergé, par l'utilisation de sondes de niveau pilotées par des automates. La pression, afin d'assurer une sécurité convenable en cas d'encrassement du niveau du condenseur, est contrôlée par des pressostats mécaniques et électroniques. La température est maîtrisée par des thermostats électroniques, afin d'optimiser l'évaporation et d'éviter un bouillonnement qui rendrait la surface de l'effluent liquide instable et rendrait les contrôles de niveau inopérants. Par mesure de sécurité au cas où les procédures d'entretien ne seraient pas respectées, le foyer est avantageusement en acier Inox NS 30, résistant aux très hautes températures.

Les vapeurs sortant de la hotte 9 par la conduite 17 sont condensées dans un condenseur 7 et le produit de cette condensation est envoyé par la conduite 19 dans une tour d'évaporation A. Les fractions incondensables sont pulsées par la conduite 20 vers le brûleur 11 pour être incinérées.

La tour d'évaporation A a pour double fonction:
. de refroidir un fluide caloporteur 18, afin de condenser les vapeurs admises, et
. d'évaporer sur un échangeur air/eau 2 les condensats qui sont ensuite collectés par les conduites 19 et pulvérisés en 1.

En variante, les vapeurs peuvent être conduites de la hotte 9 vers le condenseur 7 par tirage naturel, tandis que le moto-ventilateur 8 est alors absent de cette partie de l'installation et peut être, en option, incorporé sur la conduite 20 qui reprend les fractions incondensables pour les acheminer vers le brûleur 11.

En option un bac de recueil des condensats peut être prévu en partie basse de la conduite 19, dont la partie aval débouche ensuite dans la conduite 19.

Pour la mise en service d'un tel système, on amorce le cycle par un remplissage du bac 4 de récupération des condensats par de l'eau de ville. Ce système peut ensuite fonctionner de façon autonome.

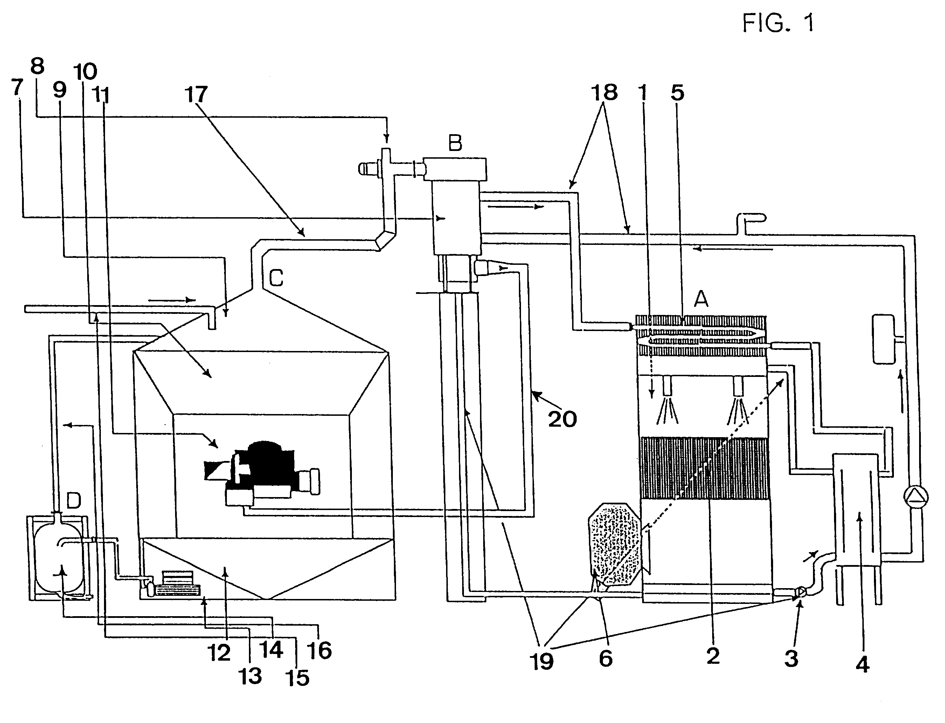

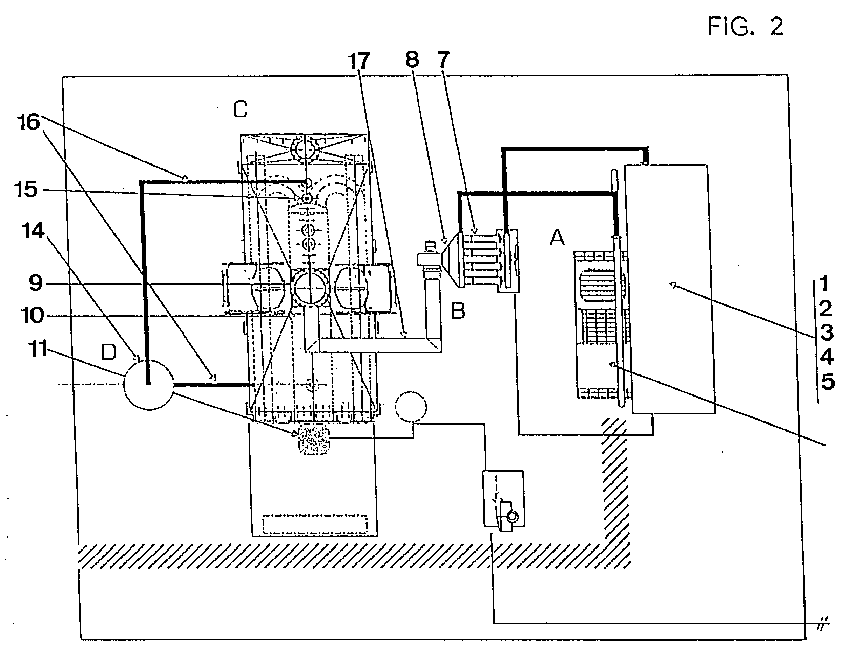

Les différentes parties fonctionnelles composant l'installation sont décrites ci-après plus en détail, en référence à une forme de réalisation concrète dont le principe de fonctionnement et l'agencement correspondent à la représentation selon les figures 1 et 2 respectivement, auxquelles il convient de se référer.

### Evaporateur:

En ce qui concerne l'évaporateur C (voir figure annexée), il se compose pour l'essentiel d'une chaudière 10, de préférence en acier Inox, avec foyer et échangeur également de préférence en acier Inox. Il est avantageux que le foyer et le faisceau échangeur soient démontables par façade pour faciliter le nettoyage et l'entretien.

Un local technique faisant face au foyer peut abriter le brûleur et les commandes électriques.

Il est avantageux de munir l'évaporateur d'un chapeau 9 en Inox couvrant de manière étanche la chaudière et collectant les vapeurs pour les conduire au condenseur 7 via une conduite appropriée 8.

Le brûleur est de préférence doté d'un pré-mélange air-gaz. L'air comburant est pulsé par une turbine, avec de préférence adaptation automatique du réglage en fonction de l'évolution de la qualité du gaz. Ce gaz carburant est avantageusement un biogaz.

Un des avantages supplémentaires de la présente invention est que le biogaz naturellement produit à partir des effluents liquides stockés avant traitement sert de gaz carburant dans ledit brûleur. Par exemple un biogaz recueilli par des moyens classiques à partir des décharges d'ordures ménagères peut comporter plus de 50% en volume de CH₄, environ 35% en volume de CO₂ et environ 10% en volume de N₂, entre autres composants.

Un réservoir étanche 14, de préférence visitable, en Inox est relié à la chaudière 10 et a pour fonctions de:
. servir de pot de décantation des boues et, s'il comporte une structure interne appropriée, comme par exemple un système à inversion de flux, séparer lesdites boues de l'effluent liquide;
. déconcentrer les impuretés et sels contenus dans l'effluent liquide par des purges, soit continuelles selon un débit défini en fonction de la teneur de l'effluent liquide en impuretés et sels, soit automatiques par électrovanne et compteur à impulsions placés, en option, sur l'approvisionnement automatique de la chaudière.

Une pompe de chargement 13, est prévue pour faire circuler l'effluent liquide entre la chaudière 10 et le réservoir étanche 14, afin d'améliorer le rendement d'évaporation et de provoquer la séparation des boues.

### Condenseur et groupe moto-ventilateur:

Le condenseur, qui fait partie d'un ensemble de condensation B, est en pratique composé d'une boîte à vapeur chaude, d'un échangeur en tubes lisses avec turbulateurs amovibles, d'une boîte à fumée froide, essentiellement destinée à la récupération des incondensables, tous ces éléments étant de préférence en acier Inox, ainsi que de tubulures de raccordement hydraulique également en acier Inox, d'un caisson calorifugé pour la boîte à vapeur et d'une jaquette calorifugée pour le corps de l'échangeur.

Le groupe moto-ventilateur est avantageusement composé d'une volute en acier Inox, d'une turbine de refroidissement, d'une turbine d'extraction en acier Inox, d'un pavillon d'aspiration en acier Inox, ainsi que d'un moteur électrique et d'un capot de protection de celui-ci.

### Tour d'évaporation:

Elle comprend des organes fonctionnels, des organes de circulation et des pompes, appropriés pour assurer les fonctions respectivement de refroidissement d'un fluide caloporteur (par ex. eau glycolée) pour la condensation des vapeurs introduites dans cette tour d'évaporation et d'évaporation des condensats sur un échangeur air/eau, ainsi que de collecte et de pulvérisation de ces condensats.

Dans la pratique, cette tour d'évaporation peut comporter en outre un ou plusieurs des organes fonctionnels ci-après: dispositif de trop-plein à grand débit, orifice de vidange muni d'une électrovanne, système d'appoint d'eau par robinet à flotteur, trappe de visite, crépine démontable, résistance antigel avec thermostat, sécurité de manque d'eau.

L'échangeur air/eau est avantageusement réalisé à base de tissu en polyéthylène haute densité, soudé à chaud, qui est imputrescible, aisément manipulable et présente une grande longévité et une excellente tenue à la température.

La distribution dans ladite tour d'évaporation est assurée par des rampes comportant des pulvérisateurs de grande efficacité. Ceux-ci sont avantageusement en polypropylène et agencés pour distribuer l'eau sous forme d'un cône à jet plein. Les pulvérisateurs sont fixés à la rampe de distribution par un système procurant une fixation ferme. De préférence, un turbulateur est présent dans ladite tour, pour répartir l'eau de manière à procurer une pulvérisation uniforme sur la surface d'échange.

La pompe de pulvérisation est de préférence une pompe centrifuge, avec volute en métal comportant une garniture mécanique.

L'échangeur proprement dit est avantageusement garni de panneaux rigides autoportants, tandis que les presse-étoupes sont agencés pour permettre le passage des câbles, des pompes, d'une résistance antigel et d'un thermostat.

L'échangeur est avantageusement du type à plaques démontables avec manchettes à brides en acier galvanisé à chaud.

Les tuyauteries de liaison entre échangeurs sont de préférence réalisées en PVC résistant à la pression.

Selon une forme de réalisation particulièrement avantageuse, un dispositif en Inox dont la maille n'excède pas 2 mm environ est placé dans le circuit de pulvérisation, en amont de l'échangeur. Un manomètre est installé au refoulement de la pompe. Un niveau bas se trouve dans le bac de la tour d'évaporation, empêchant le démarrage de la pompe et, si elle est présente, de la résistance antigel. Au refoulement de la pompe, on prévoit un piquage pour la déconcentration, qui est muni d'une vanne de réglage et est situé de préférence sous les piquages de l'échangeur.

Le moto-ventilateur est de préférence une turbine de type à action, double ouïe.

En option l'installation peut également comprendre une batterie anti-panache, de type classique, qui sèche les vapeurs et évite ainsi un panache blanc trop important, en hiver.

L'ensemble de l'installation susdite peut être asservi au moyen d'organes de commande/régulation avantageusement réunis dans une armoire de commande. Celle-ci comporte en pratique, pour des raisons de sécurité, un sectionneur général externe.

Pour chacun des sous-ensembles de l'installation, l'armoire de commande peut comprendre les éléments suivants:
A - Tour d'évaporation des condensats:
   Une commande et protection générale avec voyant de mise sous tension.
   Une commande et protection du ventilateur 6 avec voyants marche/défaut et avec contact sec pour report.
   Une commande et protection de la pompe du circuit 18 avec voyants marche/défaut et avec contact sec pour report.
   Une commande et protection de la pompe du circuit 19 (condensats) et avec contact sec pour report.
   Une commande et protection de la résistance antigel du bac à effluent liquide et avec contact sec pour report.
B - Condenseur:
   Une commande et protection de ventilateur avec voyants de marche et défaut et avec contact sec pour report.
   Un pressostat de sécurité contrôlant l'encrassement de l'échangeur avec voyant de défaut et avec contact sec pour report.
C - Evaporateur:
   Une commande et protection du brûleur avec voyant marche/défaut et avec contact sec pour report.
   Des sondes de niveaux avec automate de gestion pour piloter le remplissage automatique et les sécurités en cas de manque d'effluent liquide.
   Un régulateur de température contrôlant la température de l'effluent liquide dans la chaudière et l'affichant.
D - Unité de séparation des boues:
   Une commande et protection de la pompe 13 avec voyants marche et défaut et avec contact sec pour report.
   Une sonde de niveau pour arrêter cette pompe en cas de manque d'effluent liquide avec voyant d'alarme et avec contact sec pour report.

En fonctionnement, l'enclenchement d'un seul voyant de défaut arrête le fonctionnement de l'unité et affiche un voyant d'arrêt général.

Quant aux sécurités dont peuvent être munies les parties respectivement concernées de l'installation selon l'invention, il est avantageux de prévoir les sécurités suivantes:
- Sur la tour d'évaporation A:
   Sécurité antigel dans le bac à condensat.
   Contrôle de niveau de condensat.
- Sur le condenseur B:
   Pressostat d'air pour contrôler l'encrassement.
- Sur l'évaporateur C:
   Contrôle de température d'effluent liquide.
   Contrôle de niveau haut et bas d'effluent liquide.
   Au niveau du brûleur: contrôle de pression de gaz, contrôle de pression d'air, contrôle de température de flamme, contrôle de présence de flamme.
- Sur l'unité de séparation des boues D:
   Sonde de niveau pour arrêter la pompe en cas de manque d'effluent liquide.

L'installation selon la présente invention est en outre raccordée au réseau électrique pour recevoir une puissance électrique installée conforme aux besoins, que l'homme du métier est à même de déterminer dans chaque cas concret. Une telle installation peut prendre la forme de petites unités, aptes à traiter chacune des quantités d'effluents liquides d'environ 4 à 60 m³/jour et, si elle est bien conduite, ne rejette dans l'environnement que des vapeurs inoffensives et produit des boues concentrées, qui sont recueillies et stockées ou traitées séparément de manière classique.

Selon une forme de réalisation avantageuse, l'installation selon l'invention est construite sous une forme compacte aisément transportable, ce qui permet au choix de l'acheminer d'un seul tenant sur le site d'installation et/ou de la déplacer à volonté sur le site où, en fonction des besoins et des situations, il peut être avantageux de la déplacer.

Le procédé et l'installation selon la présente invention conviennent pour le traitement des effluents liquides de toutes natures, en particulier des lixiviats des décharges d'ordures ménagères, des lisiers et d'autres effluents liquides.

A titre d'exemple non limitatif de mise en oeuvre du procédé et de l'installation selon l'invention, on peut citer une installation ayant une capacité de traitement de 10 à 30 m³/jour, avec une capacité d'absorption de la tour A de 1,7 L par 1,16 kW échangé. Les températures d'entrée/sortie/bulbe humide pour la tour d'évaporation A sont alors de préférence de 33/28/21°C respectivement. L'écart logarithmique de température dans l'échangeur eau-fluide est avantageusement d'environ 51,3°C. La température de service maximale du condenseur 7 est de préférence d'environ 150°C, tandis que les températures d'entrée-sortie pour ce condenseur 7 sont de préférence d'environ 100 et 50°C respectivement pour le circuit primaire et d'environ 30 et 75°C respectivement pour le circuit secondaire. Dans le circuit de reprise des incondensables la température de service maximale est avantageusement d'environ 120°C.

## Revendications

1. Procédé pour le traitement et l'élimination des effluents liquides, caractérisé en ce que:
a) on vaporise, avantageusement au moyen d'un brûleur dans une chaudière, les effluents liquides réunis;
b) on collecte les vapeurs émises dans l'étape a) et on les condense;
c) on sépare les boues subsistant dans la chaudière et on déconcentre ainsi l'effluent liquide traité dans l'étape a); et
d) on évapore les vapeurs condensées de l'étape b) et on soumet les fractions incondensables à l'étape a) ci-dessus pour les incinérer;
tandis que pour amorcer le cycle d'étapes susdites on remplit au préalable le récipient de récupération des condensats, avantageusement par de l'eau de ville.

2. Procédé selon la revendication 1, caractérisé en ce qu'on utilise comme gaz carburant dans ledit brûleur du biogaz naturellement produit à partir des effluents liquides stockés avant traitement.

3. Installation pour le traitement et l'élimination des effluents liquides, caractérisée en ce qu'elle comprend, convenablement alimentés et reliés entre eux, respectivement:
a) des moyens d'introduction des effluents liquides et des moyens de vaporisation de ceux-ci, tels que par exemple au moins un brûleur (11) situé dans une chaudière (10);
b) des moyens pour la collecte des vapeurs émises par la mise en oeuvre des moyens de l'étape a) et des moyens pour la condensation des dites vapeurs;
c) des moyens pour la séparation et l'évacuation des boues subsistant dans la chaudière (10), lesdits moyens effectuant également la déconcentration de l'effluent liquide; et
d) des moyens pour l'évaporation des vapeurs condensées de l'étape b), et des moyens pour soumettre les fractions incondensables à l'étape a) ci-dessus en vue de leur incinération.

4. Installation selon la revendication 3, caractérisée en ce que ledit brûleur (11) est alimenté en gaz carburant par du biogaz naturellement produit à partir des effluents liquides stockés avant traitement.

5. Installation selon la revendication 3, caractérisée en ce que les effluents liquides sont des lixiviats de décharges d'ordures ménagères ou des lisiers.

6. Installation selon la revendication 3, caractérisée en ce que les effluents liquides traités dans la chaudière (10) sont mis en circulation entre ladite chaudière et un réservoir étanche (14), afin de séparer les boues et de déconcentrer l'effluent liquide au fur et à mesure de l'évaporation.

7. Installation selon la revendication 3, caractérisée en ce que les vapeurs sortant de la hotte (9) sont condensées dans un condenseur (7) et le produit de cette condensation est envoyé dans une tour d'évaporation A, tandis que les fractions incondensables sont pulsées vers le brûleur (11) pour être incinérées.

8. Installation selon la revendication 3, caractérisée en ce que la tour d'évaporation A a pour double fonction:
. de refroidir un fluide caloporteur (18), afin de condenser les vapeurs admises, et
. d'évaporer sur un échangeur air/eau (2) les condensats qui sont ensuite collectés et pulvérisés en (1).

9. Installation selon la revendication 3, caractérisée en ce que le bac (4) de récupération des condensats est rempli par de l'eau de ville pour l'amorçage du cycle.

10. Utilisation de l'installation selon l'une quelconque des revendications 3 à 9 pour le traitement d'effluents liquides, notamment des lixiviats de décharges d'ordures ménagères ou de lisiers.
